**Europäisches Patentamt**

**European Patent Office**

**Office européen des brevets**

(19)

(11) Veröffentlichungsnummer: **0 033 978**
**B1**

(12) # EUROPÄISCHE PATENTSCHRIFT

(45) Veröffentlichungstag der Patentschrift:
06.02.85

(51) Int. Cl.⁴: **G 06 K 9/50**

(21) Anmeldenummer: **81100966.1**

(22) Anmeldetag: **11.02.81**

(54) **Verfahren und Schattungsanordnung zur Gewinnung von Klassifizierungsmerkmalen für die automatisierte Zeichenerkennung.**

(30) Priorität: **12.02.80 DE 3005206**

(43) Veröffentlichungstag der Anmeldung:
**19.08.81 Patentblatt 81/33**

(45) Bekanntmachung des Hinweises auf die Patenterteilung:
**06.02.85 Patentblatt 85/6**

(84) Benannte Vertragsstaaten:
**AT BE CH DE FR GB IT LI NL SE**

(56) Entgegenhaltungen:
**US - A - 3 381 274**
**US - A - 4 163 213**

**PROCEEDINGS OF THE SECOND HAWAII INTERNATIONAL CONFERENCE ON SYSTEM SCIENCES, 22. - 24. Januar 1969, Seiten 329-332, North Hollywood, U.S.A., JO-SUNG TSAI et al.: "A method for pattern recognition"**

(73) Patentinhaber: **COMPUTER GESELLSCHAFT KONSTANZ MBH, Max-Stromeyer-Strasse 116, D-7750 Konstanz (DE)**

(72) Erfinder: **Bernhardt, Lutz, Dr., Fliesshornstrasse 38, D-7750 Konstanz (DE)**

(74) Vertreter: **Mehl, Ernst, Dipl.-Ing. et al, Postfach 22 01 76, D-8000 München 22 (DE)**

## Beschreibung

Die Erfindung bezieht sich auf ein Verfahren zur Gewinnung von Klassifizierungsmerkmalen für die automatisierte Zeichenerkennung nach dem Oberbegriff des Patentanspruchs 1 sowie auf eine Schaltungsanordnung zur Durchführung dieses Verfahrens gemäss dem Oberbegriff des Anspruchs 3.

Auf dem Gebiet der Zeichenerkennung sind verschiedene Klassifizierungsverfahren bekannt geworden. Eines dieser bekannten Verfahren ist das sogenannte Matrixanalyse-Verfahren, bei dem das abgetastete Zeichen in einem Speicher als ein aus schwarzen und weissen Bildpunkten bestehendes Rasterbild in der Form einer Matrix zur weiteren Auswertung zwischengespeichert wird. Dies geschieht in der Weise, dass aus dieser Matrix bestimmte Bildpunkte und Bildpunktkombinationen ausgewählt werden, die die Formen der verschiedenen Zeichen und ihre gegenseitigen Abweichungen möglichst gut charakterisieren.

Ein aus der US-A-3 381 274 bekanntes Zeichenerkennungssystem arbeitet in der Weise, dass das jeweilige Zeichen unter verschiedenen Abtastwinkeln mittels je einer entsprechend diesen Abtastwinkeln verlaufenden Schnittgeradenschar abgetastet wird, wobei pro Abtastwinkel für jede Schnittgerade die jeweilige Zahl der zwischen Schnittgerade und Zeichen sich ergebenden Schnittpunkte in Form von Schwarz/Weisswert- oder Weiss/Schwarzwertübergängen ermittelt wird.

Ein ähnliches Verfahren ist aus der US-A-4 163 213 bekannt, bei dem das Zeichen mittels einer Fotodiodenreihe spaltenweise abgetastet und das entsprechende Signal in einem Matrix-Bildsignalspeicher zwischengespeichert wird, der dann analog einer Zeichenabtastung unter verschiedenen Abtastwinkeln mit je einer entsprechend diesen Abtastwinkeln verlaufenden Schnittgeradenschar ausgelesen wird, wobei die jeweiligen Schnittpunkte ermittelt werden.

Der vorliegenden Erfindung liegt nun die Aufgabe zugrunde, ein Verfahren und eine Schaltungsanordnung zur Gewinnung von Klassifizierungsmerkmalen für die automatische Zeichenerkennung zu entwickeln, die gegenüber bekannten Zeichenerkennungsverfahren, bezogen auf eine jeweils gleiche Anzahl zu unterscheidender Zeichenklassen, eine erhöhte Lesesicherheit garantieren.

Die Lösung dieser Aufgabe ergibt sich erfindungsgemäss durch die kennzeichnenden Merkmale der Patentansprüche 1 und 3.

Im folgenden wird ein Ausführungsbeispiel der Erfindung anhand der Zeichnung näher erläutert. Dabei zeigen:

Fig. 1 bis 4: das Prinzip der Abtastung eines Zeichens unter verschiedenen Abtastwinkeln,

Fig. 5: ein Prinzipschaltbild einer Schaltungsanordnung zur Durchführung des erfindungsgemässen Verfahrens,

Fig. 6: ein Schaltungsbeispiel zur Ermittlung der zwischen Zeichen und Schnittgeradenschar sich ergebenden Schnitt- und Schwarzwertmatrixpunkte.

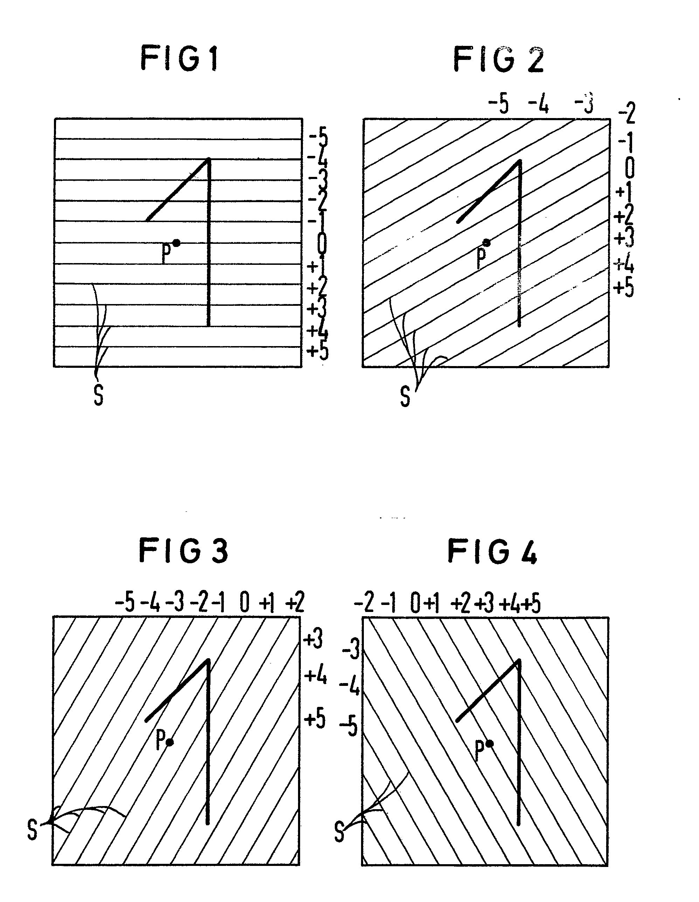

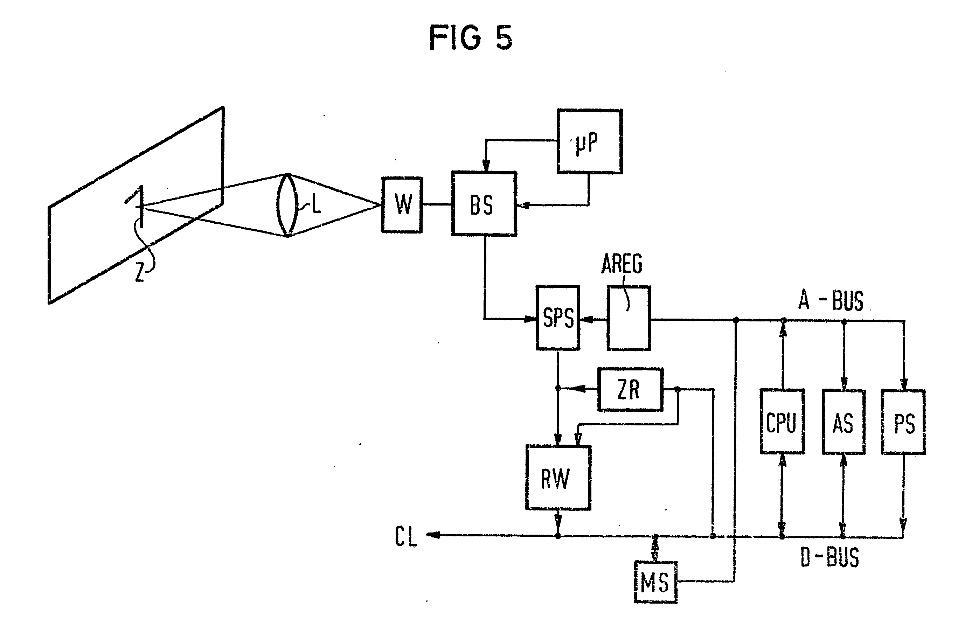

Die Fig. 1 bis 4 zeigen ein beispielsweise die Ziffer «1» darstellendes Zeichen, das unter verschiedenen Winkelgeraden zwischen 0° und 180° jeweils von einer Schnittgeradenschar S überstrichen wird. Im dargestellten Beispiel ist der gesamte Winkelbereich von 0° bis 180° in gleichgrosse Winkelabstände unterteilt, so dass sich bei einem gewählten Winkelabstand von 30° insgesamt sechs verschiedene Abtastwinkel ergeben, die bei 0° (Fig. 1), 30° (Fig. 2), 60° (Fig. 3), 90°, 120° (Fig. 4) und 150° liegen.

Als Abtasteinheit dient ein optoelektrischer Wandler, der beispielsweise aus einer Reihe äquidistant angeordneter Fotosensoren besteht. Die Abtastsignale dieser das Zeichen schrittweise abtastenden Fotosensoren werden zunächst in einem Bildsignalspeicher als eine dem abgetasteten Zeichen entsprechende, aus Schwarz-Weiss-Werten bestehende Bildmustermatrix abgespeichert, die bei entsprechender Adressierung unter verschiedenen, frei wählbaren Winkelgeraden ausgelesen werden kann. Auf diese Weise wird eine Zeichenabtastung unter entsprechend verschiedenen Abtastwinkeln simuliert. Die dabei sich ergebenden Schnittgeraden n sind mit $-5$, $-4$, $-3$ .... $0, 1, ...$ $+4$, $+5$ bezeichnet. Wesentlich dabei ist, dass die mittlere Schnittgerade 0 bei der Abtastung unter verschiedenen Winkelgeraden zwar einen beliebig wählbaren, dann aber stets festen virtuellen Punkt P schneidet. Die Zeichenauswertung erfolgt nun in der Weise, dass pro Abtastwinkel für jede Schnittgerade n zunächst die jeweilige Anzahl der zwischen Schnittgerade und Zeichen sich ergebenden Schnittpunkte ermittelt wird. In der nachstehenden Tabelle ist für jeden Abtastwinkel $\alpha$ die Anzahl der Schnittpunkte, bezogen auf die jeweilige Schnittgerade n, gemäss dem Beispiel nach Fig. 1 bis 4 dargestellt.

| $\alpha$ \ n | -5 | -4 | -3 | -2 | -1 | 0 | 1 | 2 | 3 | 4 | 5 |
|---|---|---|---|---|---|---|---|---|---|---|---|
| 0° | 0 | 1 | 2 | 2 | 2 | 1 | 1 | 1 | 1 | 1 | 0 |
| 30° | 0 | 0 | 0 | 2 | 1 | 1 | 1 | 1 | 1 | 1 | 0 |
| 60° | 0 | 0 | 0 | 0 | 1 | 1 | 1 | 1 | 1 | 0 | 0 |
| 120° | 0 | 0 | 0 | 0 | 0 | 2 | 2 | 2 | 2 | 0 | 0 |

Aus diesen Schnittpunktdaten werden nun folgende zur Auswertung des Zeichens notwendige. Merkmale gebildet. Das erste Merkmal a) ergibt sich aus der Zahl der Schnittgeraden, die mit dem abgetasteten Zeichen wenigstens einen Schnittpunkt bilden. Daraus ergibt sich der Abtastbereich für die jeweilige Schnittgeradenschar, der nach dem in der Tabelle dargestellten Beispiel beim Abtastwinkel 0° von der Schnittgeraden −4 bis zur Schnittgeraden +4 reicht, also insgesamt neun Schnittgeraden umfasst. Beim Abtastwinkel 30° liegt der Abtastbereich zwischen den Schnittlinien −2 und +4 und umfasst demnach insgesamt sieben Schnittgeraden. Beim Abtastwinkel 60° sind es fünf Schnittgeraden und beim Abtastwinkel 120° schliesslich vier Schnittgeraden. Diese, bezogen auf die einzelnen Abtastwinkel ermittelten Schnittgeraden-Summen ergeben ein erstes Erkennungskriterium, und zwar in bezug auf den Umriss des Zeichens Z. Das zweite Merkmal b) resultiert aus der Summe der Schnittpunkte für alle Schnittgeraden pro Abtastwinkel. Im gewählten Beispiel ergibt sich für den Abtastwinkel $\alpha =$ 0° die Schnittpunktsumme 12, während bei den Abtastwinkeln 30°, 60° bzw. 180° die jeweiligen Summenwerte 8, 5 und nochmals 8 betragen. Dieses zweite Merkmal b) ist bereits charakteristisch für den Linienzug des jeweiligen Zeichens.

Als drittes Merkmal c) wird aus den Schnittpunktdaten, d. h. aus deren quantitativer Verteilung, innerhalb des jeweils erfassten Schnittgeradenbereiches der sogenannte Schwerpunkt des Zeichens gebildet. Mit Hilfe dieses Merkmals c) ist es dann auch bereits möglich, die Ziffer «6» von einer auf dem Kopf stehenden Ziffer «6», d. h. von der Ziffer «9» zu unterscheiden. Schliesslich wird als viertes Merkmal d) die sogenannte Streuung, bezogen auf den Schwerpunkt gemäss Merkmal c) ermittelt. Diese Streuung gibt eine Aussage darüber, ob die Schnittgeraden mit höheren Schnittpunktzahlen mehr am Zeichenrand oder mehr im Bereich der Zeichenmitte, d. h. im Nahbereich der mittleren Schnittlinie 0 liegen. Zusätzliche Unterscheidungskriterien lassen sich darüber hinaus dadurch gewinnen, dass der Abtastbereich pro Abtastwinkel, bezogen auf eine mittlere Schnittgerade 0 der Schnittgeradenschar in einen positiven und einen negativen Bereich unterteilt und jeder der beiden Bereiche hinsichtlich der Merkmale a) und d) getrennt ausgewertet werden.

Schliesslich wird die Unterscheidungssicherheit noch dadurch gesteigert, dass pro Abtastwinkel für jede Schnittgerade die Summe der in der Bildmustermatrix längs dieser Schnittgeraden auftretenden Schwarzwert-Matrixpunkte festgestellt wird und anhand dieser Schwarzwerte aller Schnittgeraden pro Abtastwinkel der Schwerpunkt innerhalb des Abtastbereiches und die Streuung bezogen auf diesen Schwerpunkt ermittelt werden. Auch hier kann die Streuung getrennt für den positiven und negativen Bereich der Schnittgeradenschar ermittelt werden.

Eine Schaltungsanordnung zur Durchführung des anhand der Fig. 1 bis 4 erläuterten Zeichenerkennungsverfahrens ist im Prinzip in der Fig. 5 dargestellt. Diese Fig. 5 zeigt im einzelnen eine Abtastoptik L, mittels der das abzutastende Zeichen Z spaltenweise auf eine Fotodiodenreihe eines optoelektrischen Wandlers W abgebildet wird. Dessen Ausgangssignale werden wiederum in einem nachfolgenden Bildsignalspeicher BS als eine dem abgetasteten Zeichen entsprechende, aus Schwarz-Weiss-Werten bestehende Bildmustermatrix abgespeichert. Durch entsprechende Adressierung besteht nun die Möglichkeit, die Matrix in verschiedenen, frei wählbaren Winkelgeraden auszulesen, wodurch in vorteilhafter Weise eine Abtastung eines Zeichens unter verschiedenen Abtastwinkeln simuliert werden kann. Bei diesen durch ein Mikroprozessorsystem µP gesteuerten Auslesevorgängen werden nun für jede einzelne Schnittgeradenschar die jeweilige Anzahl der längs jeder Schnittgeraden auftretenden Schwarzpunkte sowie die Anzahl der zwischen Schnittgerade und Zeichen in Form von Schwarz-/Weisswert- oder Weiss-/Schwarzwertübergängen sich ergebenden Schnittpunkte ermittelt und als entsprechende Zahlenwerte in einem nachgeschalteten Schwarzpunkt-/Schnittpunkt-Speicher SPS abgespeichert. Aus diesen Schwarzpunkt-/Schnittpunkt-Zahlenwerten werden dann mit Hilfe eines Mikroprozessors die im Zusammenhang mit den Fig. 1 bis 4 bereits erwähnten Merkmalsgrössen a), b), c), d) ermittelt, die schliesslich einem Klassifikator zur endgültigen Identifizierung des jeweils abgetasteten Zeichens Z zugeführt werden. Die dazugehörige Schaltung besteht aus einem dem Schnittpunkt-/Schwarzpunkt-Speicher SPS nachgeschalteten Rechenwerk RW mit Multiplizier- und Akkumulatorstufe, einem Merkmalspeicher MS sowie einem Mikrocomputersystem mit Zentraleinheit CPU, Arbeitsspeicher AS und Programmspeicher PS. Die einzelnen Komponenten sind über ein Bussystem, bestehend aus Datenbus D-Bus und Adressbus A-Bus miteinander verknüpft. Einem der beiden mit dem Datenbus D-Bus verbundenen Eingänge des Rechenwerkes ist ein Zwischenregister ZR vorgeschaltet, während dem Schnittpunkt-/Schwarzpunktspeicher SPS ein mit dem Adressbus A-Bus verbundenes Adressregister A-REG zugeordnet ist. Die Zentraleinheit CPU steuert nach den im Programmspeicher PS abgelegten Programmen die Berechnung der Merkmalgrössen a), b), c), d). Die Multiplizierstufe im Rechenwerk RW wird benötigt, da die Zentraleinheit CPU über keinen Multiplikationsbefehl verfügt. Der Arbeitsspeicher AS dient der Aufnahme von Zwischenresultaten und Tabellen für die Division und Quadratbildung. Zur Berechnung der Merkmalsgrösse a) werden sukzessive alle Schnittpunktzahlen für die jeweiligen Abtastwinkel aus dem Schnittpunkt-/Schwarzpunkt-Speicher SPS ausgelesen. Die Zentraleinheit CPU überprüft dann, ob sie gleich Null sind. Ist das nicht der Fall, wird die Akkumulatorstufe im Rechenwerk RW um den Wert Eins erhöht. Das jeweilige Ergebnis wird schliesslich im Merkmalsspeicher MS abgelegt.

Zur Bildung der Merkmalsgrösse b) werden wiederum die Schnittpunktzahlen aus dem Schnittpunkt-/Schwarzpunkt-Speicher SPS ausgelesen und unmittelbar in der Akkumulatorstufe des Rechenwerkes RW aufsummiert. Das Ergebnis wird wiederum im Merkmalsspeicher MS abgelegt.

Die Merkmalsgrösse c) erfordert zwei Prozesse. Beim ersten Auslesen der Schnittpunktzahlen aus dem Schnittpunkt-/Schwarzpunkt-Speicher SPS wird in der Akkumulatorstufe für jede von Null verschiedene Schnittpunktzahl die Nummer der zugehörigen Schnittgeraden aufsummiert. Das Ergebnis wird mittels einer Divisionstabelle im Arbeitsspeicher AS durch den zugehörigen Merkmalswert a) aus dem Merkmalsspeicher MS dividiert und im Arbeitsspeicher AS abgelegt. Beim zweiten Auslesen der Schnittpunktzahlen aus dem Schnittpunkt-/Schwarzpunkt-Speicher SPS werden diese unmittelbar in der Multiplizierstufe des Rechenwerkes RW mit der Nummer der zugehörigen Schnittgeraden multipliziert und ebenfalls im Akkumulator aufsummiert. Das Ergebnis wird durch den zugehörigen Merkmalswert b) aus dem Merkmalsspeicher MS dividiert. Die Differenz mit dem im ersten Prozess ermittelten Wert aus dem Arbeitsspeicher AS ist das Merkmal c) und wird ebenfalls im Merkmalsspeicher MS abgelegt.

Zur Bildung der Merkmalsgrösse d) wird zunächst das zugehörige Merkmal c) aus dem Merkmalsspeicher MS ausgelesen und zur Zentraleinheit CPU übertragen. In der Zentraleinheit CPU wird dür jede Schnittgeraden-Nummer die Differenz zwischen der Merkmalsgrösse c) und dieser Nummer gebildet. Diese Differenz wird mittels einer Tabelle im Arbeitsspeicher AS quadriert und der Multiplizierstufe des Rechenwerkes zugeführt. Dort wird dieser Wert mit der zugehörigen Schnittpunktzahl aus dem Schnittpunkt-/Schwarzpunkt-Speicher multipliziert und das Ergebnis in der Akkumulatorstufe aufsummiert. Am Ende dieses Prozesses wird der akkumulierte Wert mittels der Zentraleinheit CPU und der Divisionstabelle im Arbeitsspeicher AS durch den Wert der zugehörigen Merkmalsgrösse b) dividiert. Das Ergebnis ist der Wert der Merkmalsgrösse d) und wird ebenfalls im Merkmalsspeicher MS abgelegt.

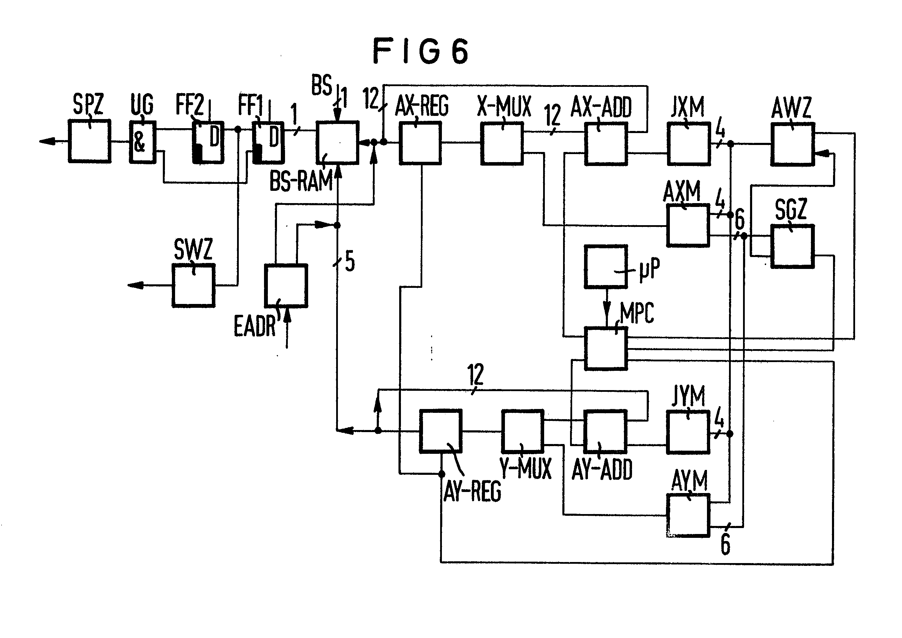

Ein Schaltungsbeispiel zur Ermittlung der zwischen Zeichen und Schnittgeradenschar sich ergebenden Schwarz- bzw. Schnittpunkte ist in Fig. 6 dargestellt. Sie zeigt einen Bildsignalspeicher BS-RAM, dem je ein X-Koordinaten-Adressregister AX-REG bzw. Y-Koordinaten-Adressregister AY-REG zugeordnet ist. Beide Adressregister AX-REG, AY-REG sind über je einen Multiplexer X-MUX, Y-MUX jeweils mit einem koordinatenbezogenen Adressspeicher AXM, AYM und einem Adressaddierer AX-ADD, AY-ADD verbunden. Eingangsseitig sind die beiden Adressaddierer AX-ADD, AY-ADD mit je einem Inkrementspeicher IXM, IYM und dem Ausgang des jeweils zugehörigen Adressregisters AX-REG, AY-REG verknüpft. Die beiden Adressspeicher AXM, AYM mit z. B. 512 mal 12 Bitstellen und die beiden Inkrementspeicher IXM, IYM mit z. B. 12 mal 12 Bitstellen sind durch einen Abtastwinkelzähler AWZ, die beiden Adressspeicher AXM, AYM zusätzlich noch durch einen Schnittgeradenzähler SGZ ansteuerbar. Der Schnittgeradenzähler SGZ steuert ausserdem noch den Abtastwinkelzähler AWZ.

Diese in Fig. 6 dargestellte Schaltung arbeitet im einzelnen wie folgt. Die jeweils einem Zeichen zugeordneten Bildsignale BS werden, jeweils gesteuert durch ein Einschreib-Adressregister EADR, im Bildsignalspeicher BS-RAM als eine dem abgetasteten Zeichen entsprechende, aus Schwarz-Weiss-Werten bestehende Bildmustermatrix abgespeichert. Ausserdem werden die mittels einer Mikroprozessor-Steuerung MPC vorher auf Null gestellten Abtastwinkelzähler AWZ und Schnittgeradenzähler SGZ auf den jeweils ersten Abtastwinkel $\alpha$ bzw. auf die jeweils erste Schnittgerade für diesen Abtastwinkel eingestellt. Jede Schnittgerade hat nun bei einem festen Abtastwinkel einen genau festgelegten Anfangspunkt, dessen im X-bzw. Y-Adressspeicher AXM bzw. AYM gespeicherte X- bzw. Y-Anfangsadresse über den X- bzw. Y-Multiplexer X-MUX bzw. Y-MUX sowie über das X- bzw. Y-Adressregister AX-REG bzw. AY-REG an den Bildsignalspeicher BS-RAM gelangt, aus dem dann der erste Bildpunkt ausgelesen werden kann. Aufgrund des jeweils eingestellten Abtastwinkels ergibt sich eine eindeutige Aussage hinsichtlich der Abtastrichtung bzw. hinsichtlich der Lage des nächsten Abtastpunktes, wobei die Lageänderung durch ein bestimmtes Inkrement sowohl in X-Richtung als auch in Y-Richtung festgelegt wird. Diese winkelspezifischen Inkremente werden aus je einem X- bzw. Y-Inkrementspeicher IXM bzw. IYM ausgelesen und im X- bzw. Y-Adressaddierer AX-ADD bzw. AY-ADD zur jeweils aktuellen Adresse hinzuaddiert. Die auf diese Weise erhöhten Adressen bilden die Ausgangssignale der beiden Adressaddierer AX-ADD und AY-ADD und gelangen über den Multiplexer X-MUX bzw. Y-MUX und die beiden Adressregister AX-REG und AY-REG ebenfalls an den Bildsignalspeicher BS-RAM, aus dem dann der jeweils nächste Bildpunkt ausgelesen wird. Dies setzt sich so lange fort, bis sich in den Adressregistern AX-REG, AY-REG Adressen ergeben, die nicht mehr im Adressbereich des Bildsignalspeichers BS-RAM liegen. In diesem Fall wird dann der Schnittgeradenzähler SGZ durch die Mikroprozessorsteuerung MPC des Mikroprozessors µP aktiviert und um den Wert «1» erhöht.

Ausgehend von der jeweils neuen Anfangsadresse für die jeweils nächste Schnittgerade wiederholt sich nun das soeben geschilderte Verfahren so lange, bis die letzte Schnittgerade abgearbeitet ist. Hierauf wird der Abtastwinkelzähler AWZ auf den nächsten Abtastwinkel eingestellt, so dass das gesamte Verfahren, beginnend mit der jeweils ersten Schnittgeraden wieder von vorne beginnen kann. Dies setzt sich so lange fort, bis mit der letzten Schnittgeraden des letzten Abtastwinkels das gesamte Bildmuster abgearbeitet ist. Anschliessend erfolgt die Einspeicherung eines neuen Bildmusters, das dann in analoger Weise ausgelesen werden kann.

Die aus dem Bildsignalspeicher BS-RAM ausgelesenen Bildsignale werden nun hinsichtlich der Anzahl der Schwarzpunkte und hinsichtlich der Anzahl der Schnittpunkte getrennt ausgewertet. Zu diesem Zweck ist ein erstes D-Flipflop FF1 vorgesehen, dessen Ausgang mit einem Schwarzpunktzähler SWZ verbunden ist. Zur Auswertung der Schnittpunkte ist ein weiteres, in Serie zum ersten geschaltetes D-Flipflop FF2 vorgesehen, dessen Ausgang mit dem invertierten Ausgang des ersten D-Flipflops FF1 über ein UND-Glied UG verknüpft ist. Dieses UND-Glied UG liefert immer dann ein von einem Schnittpunktzähler SPZ registriertes Ausgangssignal, wenn bei den Ausgangssignalen des Bildsignalspeichers BS-RAM ein Wechsel von Schwarzwerten auf Weisswerte oder umgekehrt stattfindet.

## Patentansprüche

1. Verfahren zur Gewinnung von Klassifizierungsmerkmalen für die automatisierte Zeichenerkennung, unter Verwendung eines aus einer Reihe von Fotosensoren bestehenden, das jeweilige Zeichen spaltenweise abtastenden optoelektrischen Wandlers, dessen Ausgangssignale als eine dem abgetastete Zeichen entsprechende, aus Schwarz- und Weisswerten bestehende Bildmustermatrix in einem nachfolgenden Bildsignalspeicher abgespeichert werden, der anschliessend analog einer Zeichenabtastung unter verschiedenen Abtastwinkeln mit je einer entsprechend diesen Abtastwinkeln verlaufenden Schnittgeradenschar ausgelesen wird, wobei pro Abtastwinkel für jede Schnittgerade die jeweilige Zahl der zwischen Schnittgerade und Zeichen sich ergebenden Schnittpunkte in Form von Schwarz/Weisswert- oder Weiss/Schwarzwert-Übergängen ermittelt wird, dadurch gekennzeichnet, dass pro Abtastwinkel aus den längs der Schnittgeraden auftretenden Schnittpunkten und Schwarzwert-Matrixpunkten

a) der Abtastbereich der Schnittgeradenschar als Anzahl der das jeweilige Zeichen wenigstens einmal schneidenden Schnittgeraden,

b) die Summe der Schnittpunkte und der Schwarzwert-Matrixpunkte, die längs aller Schnittgeraden auftreten,

c) der Schwerpunkt des Zeichens anhand der quantitativen Verteilung der Schnitt- und Schwarzwert-Matrixpunkte aller Schnittgeraden innerhalb des Abtastbereichs,

d) die Streuung der Schnitt- und Schwarzwert-Matrixpunkte aller Schnittgeraden innerhalb des Abtastbereichs bezogen auf den Schwerpunkt als Abstand derjenigen Schnittgeraden mit den relativ meisten Schnitt- und Schwarzwert-Matrixpunkten vom Zeichenschwerpunkt
ermittelt werden.

2. Verfahren nach Anspruch 1, dadurch gekennzeichnet, dass der Abtastbereich pro Abtastwinkel, bezogen auf eine mittlere Schnittgerade der Schnittgeradenschar, in einen positiven und negativen Bereich unterteilt und jeder der beiden Bereiche getrennt ausgewertet wird.

3. Schaltungsanordnung zur Ermittlung der zwischen Zeichen und Schnittgeradenschar sich ergebenden Schnittpunkte und der längs der Schnittgeraden auftretenden Schwarzwert-Matrixpunkte in einem Verfahren zur Gewinnung von Klassifizierungsmerkmalen nach einem der Ansprüche 1 oder 2, dadurch gekennzeichnet, dass einem ersten matrixartigen Bildsignalspeicher (BS-RAM) je ein X-Koordinaten- und Y-Koordinaten-Adressregister (AX-REG, AY-REG) zugeordnet ist, dass das jeweils auf die X- bzw. Y-Koordinate bezogene Adressregister über je einen Multiplexer (X-MUX, Y-MUX) einerseits mit je einem Adressspeicher (AXM, AYM) und andererseits mit einem Adressaddierer (AX-ADD, AY-ADD) verbunden ist, der eingangsseitig mit einem Inkrementspeicher (IXM, IYM) und dem Ausgang des Adressregisters (AX-REG, AY-REG) verknüpft ist, dass die Adressspeicher und die Inkrementspeicher von einem Abtastwinkelzähler (AWZ) und die Adressspeicher zusätzlich von einem Schnittgeradenzähler (SGZ) ansteuerbar sind, der seinerseits wieder den Abtastwinkelzähler (AWZ) ansteuert, dass am Ausgang des Bildsignalspeichers (BS-RAM) ein erstes D-Flipflop (FF1) angeschlossen ist, dessen Ausgang sowohl mit einem Schwarzpunktzähler (SWZ) als auch mit einem zweiten D-Flipflop (FF2) verbunden ist, und dass der Ausgang des zweiten D-Flipflops (FF2) mit dem invertierten Ausgang des ersten D-Flipflops (FF1) über ein ausgangsseitig mit einem Schnittpunktzähler (SPZ) verbundenes UND-Glied (UG) verknüpft ist.

## Claims

1. A method of obtaining classification features for automatic character recognition, using an optoelectric transducer which consists of a series of photo-sensors and scans the character in question column by column, and whose output signals are stored in an image-signal store in the form of a pattern matrix of black and white values which corresponds to the scanned character, subsequent read-out being analogous to a character scanning operation at different scanning angles, in each case with a family of intersecting straight lines running in accordance with the scanning angles, where in respect of each scanning angle the relevant number of the intersection points occurring between intersecting straight line and character for each intersecting straight line are determined in the form of black/white transitions or white/black transitions, characterised in that from the intersection points and black-white matrix points occurring along the intersecting straight lines in respect of each scanning angle the following are determined:

a) the scanning range of the family of intersecting straight lines as the number of intersecting straight lines which intersect the character in question at least once;

b) the sum of the intersection points and the black value matrix points which occur along all the intersecting straight lines;

c) the centre of gravity of the character on the basis of the quantitative distribution of the intersection points and black value matrix points of all the intersecting straight lines within the scanning range; and

d) the scatter of the intersection points and black value matrix points of all the intersecting straight lines within the scanning range relative to the centre of gravity as the distance of those intersecting straight lines having relatively the most intersection points and black value matrix points from the centre of gravity of the character.

2. A method as claimed in Claim 1, characterised in that the scanning range in respect of each scanning angle, relative to a mean intersecting straight line of the family of straight lines, is divided into a positive and negative range and each of the two ranges is separately analysed.

3. A circuit arrangement for determining the intersection points which occur between a character and family of intersecting straight lines, and the black value matrix points which occur along the intersecting straight lines in a method of obtaining classification features as claimed in one of Claims 1 or 2, characterised in that a first matrix-like image signal store (BS-RAM) is assigned in each case one X-co-ordinate and Y-co-ordinate address register (AX-REG, AY-REG), that the address register, relative to the X- or Y-co-ordinate, is connected via a multiplexer (X-MUX, Y-MUX) on the one hand to an address store (AXM, AYM) and on the other hand to an address adder (AX-ADD, AY-ADD) which at its input is logic-linked to an increment store (IXM, IYM) and to the output of the address register (AX-REG, AY-REG), that the address stores and the increment stores can be driven by a scanning angle counter (AWZ), and the address stores can be additionally driven by an intersecting straight line counter (SGZ) which itself in turn drives the scanning angle counter (AWZ), that the output of the image signal store (BS-RAM) is connected to a first D-type flip-flop stage (FFI) whose output is connected both to a black point counter (SWZ) and to a second D-type flip-flop stage (FF2), and that the output of the second D-type flip-flop stage (FF2) is logic-linked to the inverted output of the first D-type flip-flop stage (FF1) via an AND-gate (UG) which is connected at its output to an intersection point counter (SPZ).

## Revendications

1. Procédé pour l'acquisition de caractéristiques de classification, pour la reconnaissance automatique de signes, avec mise en œuvre d'un transducteur optoélectrique constitué par une rangée de photoconducteurs et balayant colonne par colonne le signe concerné, transducteur optoélectrique dont les signaux sont mémorisés, sous la forme d'une matrice de modèle d'image correspondant au signe et constituée par des niveaux du noir et du blanc, dans une mémoire aval de signaux d'image qui est ensuite lue de façon analogue à un balayage de signe, sous certains angles de balayage, avec respectivement une famille de droites d'intersections s'étendant suivant ces angles de balayage, la réalisation étant telle que pour un angle de balayage et pour chaque droite d'intersection, le nombre de points d'intersection, obtenus entre la droite d'intersection et le signe, est déterminé sous la forme de passage du niveau du noir au niveau du blanc ou du niveau du blanc au niveau du noir, caractérisé par le fait que par angle de balayage on détermine à partir des points d'intersection qui se présentent le long des lignes d'intersection et des points de matrice du niveau noir,

a) la plage de balayage de la famille des droites d'intersection comme étant représentative du nombre des droites d'intersection qui coupent au moins une fois le signe concerné,

b) la somme des points d'intersection et des points de matrice à niveau du noir qui apparaissent le long de toutes les droites d'intersection,

c) le centre de gravité du signe à l'aide de la répartition quantitative des points d'intersection et des points de la matrice à niveau du noir de toutes les droites d'intersection dans la plage de balayage,

d) la dispersion des points d'intersection et des points du niveau du noir de la matrice de toutes les droites d'intersection dans la plage balayée, rapportée au centre de gravité en tant que distance entre d'une part les droites d'intersection ayant relativement le plus grand nombre de points d'intersection et de points du niveau du noir de la matrice, et, d'autre part, le centre de gravité du signe.

2. Procédé selon la revendication 1, caractérisé par le fait que la plage balayée, par angle de balayage, rapportée à une droite d'intersection médiane de la famille des droites d'intersection, est subdivisée en une plage positive et en une plage négative, et que chacune de ces plages est évaluée séparément.

3. Montage pour la détermination des points d'intersection entre le signe et la famille de droites d'intersection et des points de matrice à niveau du noir qui se présentent le long des droites d'intersection, dans un procédé pour l'acquisition de caractéristiques de classification, selon l'une des revendications 1 ou 2, caractérisé par le fait qu'à une première mémoire matricielle (BS-RAM) des signaux d'image on associe respectivement un registre d'adresses pour les coordonnées en X et en Y (AX-REG, AY-REG), que le registre d'adresses qui est rapporté aux coordonnées X et Y respectivement est relié par, respectivement, un multiplexeur (X-MUX, Y-MUX), d'une part, avec une mémoire d'adresses (AXM, AYM), et d'autre part à un additionneur d'adresses (AX-ADD, AY-ADD) qui est combiné logiquement, du côté de l'entrée, avec une mémoire incrémentale (IXM, IYM) et à la sortie du registre d'adresses (AX-REG, AY-REG), que les mémoires d'adresses et les mémoires incrémentales sont susceptibles d'être commandées par un compteur de l'angle de balayage (AWZ) alors que les mémoires d'adresses sont, de plus, susceptibles d'être commandées par un compteur de droites d'intersection (SGZ) qui, à son tour, attaque à nouveau le compteur d'angle de balayage (AWZ), qu'à la sortie de la mémoire de signaux d'image (BS-RAM) est relié un premier multivibrateur bistable du type D (FF1) dont la sortie est reliée aussi bien à un compteur de points du niveau du noir (SWZ) qu'à un second multivibrateur bistable du type D (FF2), et que la sortie du second multivibrateur bistable du type D (FF2) est reliée logiquement avec la sortie inverseuse du premier multivibrateur bistable du type D (FF1), à l'aide d'un circuit ET (UG) qui est relié, du côté sortie, avec un compteur des points d'intersection (SPZ).

# FIG 1

# FIG 2

# FIG 3

# FIG 4

FIG 5

# FIG 6

0 033 978